# FASCICULE DE BREVET EUROPEEN

(11) **EP 3 385 122 B1**
(45) Date de publication et mention de la délivrance du brevet: **20.05.2020**
(21) Numéro de dépôt: 18162393.5
(22) Date de dépôt: 16.03.2018
(51) Int. Cl.: B60Q 1/14, F21S 41/00

(54) **DISPOSITIF D'ÉCLAIRAGE À ÉCLAIREMENT DE PORTÉE VARIABLE ENTRE UNE FAIBLE PORTÉE ET UNE LONGUE PORTÉE**
BELEUCHTUNGSVORRICHTUNG MIT BELEUCHTUNG UNTERSCHIEDLICHER REICHWEITE VON KURZER BIS LANGER REICHWEITE
LIGHTING DEVICE WITH VARIABLE-RANGE ILLUMINATION BETWEEN A SHORT RANGE AND A LONG RANGE

(30) Priorité: 05.04.2017 FR 1752944
(43) Date de publication de la demande: 10.10.2018
(73) Titulaire: PSA Automobiles SA, 78300 Poissy (FR)
(72) Inventeur: SURUGUE, MICHEL, 91190 GIF SUR YVETTE (FR); GONCALVES, WHILK MARCELINO, 75013 PARIS (FR); JACQUEMARD, Ivan, 92130 ISSY LES MOULINEAUX (FR)

(56) Documents cités:
- EP-A1- 1 923 262
- EP-A2- 2 562 041
- WO-A1-2012/045775
- US-A1- 2008 055 896
- US-A1- 2009 141 513

## Description

L'invention concerne les dispositifs d'éclairage qui comprennent des diodes électroluminescentes propres à participer à la formation d'un faisceau de lumière d'éclairage pour un véhicule.

Dans ce qui suit, on entend par « diode lumineuse » aussi bien une diode électroluminescente de type classique (ou LED (« Light-Emitting Diode »)) qu'une diode électroluminescente organique (ou OLED (« Organic Light-Emitting Diode »)).

Comme le sait l'homme de l'art, certains véhicules (généralement de type automobile), comprennent au moins un premier dispositif d'éclairage assurant des fonctions photométriques d'éclairage de types dits feu de croisement (ou LB (« low beam »)) et feu de route (ou HB (« high beam »)). Pour ce faire, le premier dispositif d'éclairage, qui fait généralement partie d'un bloc optique avant, comprend un premier groupe de diodes électroluminescentes participant à la formation d'un premier faisceau de lumière assurant un éclairement à faible portée (ou LB) pour la fonction de feu de croisement, un second groupe de diodes électroluminescentes participant à la formation d'un second faisceau de lumière assurant un éclairement à moyenne portée (ou HB) pour la fonction de feu de route, et des moyens d'alimentation électrique fournissant aux diodes électroluminescentes des deux groupes des alimentations électriques définies par des commandes.

On entend ici par « faible portée » une portée dont la valeur maximale est typiquement comprise entre 60 m et 100 m, et par « moyenne portée » une portée dont la valeur maximale est typiquement comprise entre 150 m et 300 m.

Comme décrit dans le document brevet WO 2012/45775, certains véhicules offrent en complément des fonctions de feu de croisement et de feu de route une fonction photométrique d'éclairage à très longue portée, par exemple pour éclairer de façon très localisée en complément de la fonction de feu de route. On entend ici par « très longue portée » une portée d'environ 600 m. Cette fonction photométrique complémentaire est assurée par un second dispositif d'éclairage qui délivre un faisceau de lumière bien collimaté et défini à partir de photons générés par des diodes laser. Ce second dispositif d'éclairage peut faire partie du même bloc optique que le premier dispositif d'éclairage, ou bien il peut faire partie d'un bloc optique dédié à sa fonction photométrique d'éclairage à très longue portée, ce qui augmente le poids et l'encombrement du véhicule.

Lorsque les fonctions photométriques de feu de croisement et de feu de route sont contrôlées automatiquement en fonction des objets détectés dans l'environnement du véhicule et/ou du contexte environnemental du véhicule, il peut arriver que la fonction photométrique d'éclairage à très longue portée demeure active un bref instant après la commutation de feu de route à feu de croisement. Cela résulte du fait que la fonction photométrique d'éclairage à très longue portée est contrôlée par des moyens de contrôle spécifiques, indépendants de ceux qui contrôlent les fonctions photométriques de feu de croisement et de feu de route. Lorsqu'une telle situation survient, elle peut induire un fort éblouissement de passager(s) d'au moins un autre véhicule et/ou de piéton(s) et/ou d'animaux, ce qui peut s'avérer gênant.

Par ailleurs, l'activation et la désactivation de la fonction photométrique d'éclairage à très longue portée s'effectuent selon un mode de type « tout ou rien » et donc de façon non progressive, si bien que l'accoutumance oculaire du conducteur est négligée, ce qui peut diminuer, voire annuler, au moins temporairement, l'intérêt que représente l'éclairement localisé à très longue portée.

On connait également du document EP1923262A1 un dispositif d'éclairage conforme au préambule de la revendication 1.

Toutefois, ce document ne considère pas le profil de la portion de route sur laquelle évolue le véhicule.

L'invention a donc notamment pour but d'améliorer la situation.

Elle propose notamment à cet effet un dispositif d'éclairage conforme à la partie caractérisante de la revendication 1.

Grâce à l'invention, on dispose d'un dispositif d'éclairage qui peut délivrer un faisceau de lumière dont l'éclairement a une portée qui peut croître entre la faible portée d'un feu de croisement et une longue portée, via la moyenne portée d'un feu de route, lorsque la route comporte des virages.

Le dispositif d'éclairage selon l'invention peut comporter d'autres caractéristiques qui peuvent être prises séparément ou en combinaison, et notamment :
- dans un premier mode de réalisation, ses moyens de contrôle peuvent être propres, en cas de réception de l'autorisation d'éclairement à longue portée devant le véhicule, à fournir aux moyens d'alimentation électrique trois commandes successives propres à induire respectivement un premier faisceau de lumière assurant l'éclairement de faible portée, puis un deuxième faisceau de lumière assurant l'éclairement de moyenne portée, puis un troisième faisceau de lumière assurant l'éclairement de longue portée ;
- dans un second mode de réalisation, ses moyens de contrôle peuvent être propres, en cas de réception de l'autorisation d'éclairement à longue portée devant le véhicule, à fournir aux moyens d'alimentation électrique des commandes successives propres à induire un faisceau de lumière assurant un éclairement ayant une portée croissant progressivement de la faible portée à la longue portée ;
- ses moyens de contrôle peuvent être propres, en cas de réception de l'autorisation d'éclairement à longue portée devant le véhicule, à fournir aux moyens d'alimentation électrique les commandes successives lorsque le véhicule circule à une vitesse supérieure à un premier seuil prédéfini ;
   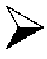 le premier seuil prédéfini peut être compris entre 50 km/h et 70 km/h ;
- ses moyens de contrôle peuvent être propres à augmenter la portée de l'éclairement dans un premier intervalle de temps prédéfini ;
- ses moyens de contrôle peuvent être propres à fournir aux moyens d'alimentation électrique une commande qui est destinée à induire une valeur maximale de la longue portée qui est fonction d'un rayon de courbure d'une portion d'une voie de circulation sur laquelle circule le véhicule et/ou d'une distance séparant ce dernier d'un autre véhicule ou corps placé devant lui ;
- ses moyens de contrôle peuvent être propres, en cas de réception d'une fin d'autorisation d'éclairement à longue portée devant le véhicule, à fournir aux moyens d'alimentation électrique des commandes successives propres à induire un faisceau de lumière assurant un éclairement de portée décroissante entre la longue portée et la faible portée, via la moyenne portée ;
   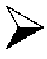 ses moyens de contrôle peuvent être propres à fournir aux moyens d'alimentation électrique les commandes successives imposant l'éclairement de portée décroissante lorsque le véhicule circule à une vitesse inférieure à un second seuil prédéfini ;
      - le second seuil prédéfini peut être compris entre 60 km/h et 80 km/h ;
   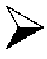 ses moyens de contrôle peuvent être propres à diminuer la portée de l'éclairement dans un second intervalle de temps prédéfini ;
- ses diodes électroluminescentes peuvent être de type classique (ou LED) ou de type organique (ou OLED).

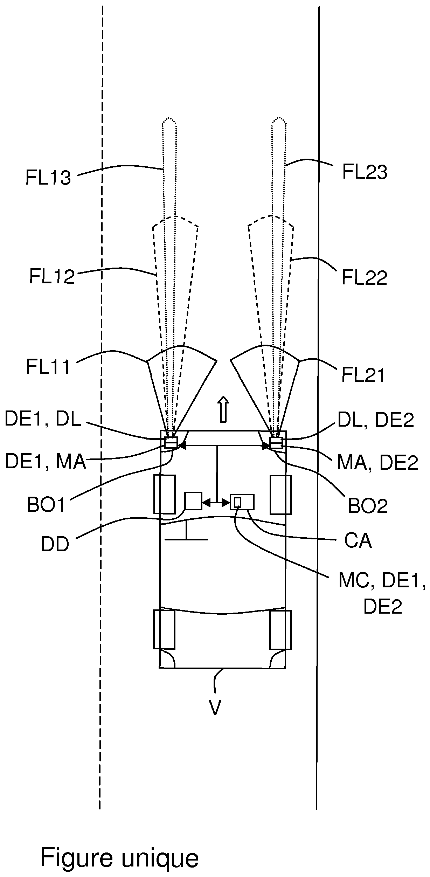

D'autres caractéristiques et avantages de l'invention apparaîtront à l'examen de la description détaillée ci-après, et du dessin annexé, sur lequel l'unique figure illustre schématiquement et fonctionnellement, dans une vue du dessus, un exemple de véhicule automobile équipé de deux exemples de réalisation de dispositifs d'éclairage selon l'invention.

L'invention a notamment pour but de proposer un dispositif d'éclairage DEj à diodes électroluminescentes DL participant, dans un véhicule V, à la définition de faisceaux de lumière FLjk assurant respectivement des éclairements de portées comprises entre une faible portée d'une fonction de feu de croisement et une longue portée, via une moyenne portée d'une fonction de feu de route, en fonction des besoins et du contexte environnemental.

Dans ce qui suit, on considère, à titre d'exemple non limitatif, que le dispositif d'éclairage DEj est destiné à faire partie au moins partiellement d'un bloc optique BOj d'un véhicule V. Par exemple, ce bloc optique BOj est un phare (ou projecteur) avant. Mais un dispositif d'éclairage DEj, selon l'invention, peut être un équipement constituant un bloc optique. Dans ce cas, il comporte son propre boîtier.

Par ailleurs, on considère dans ce qui suit, à titre d'exemple non limitatif, que le véhicule V est de type automobile. Mais l'invention n'est pas limitée à ce type de véhicule. En effet, le véhicule peut être terrestre, maritime (ou fluvial), ou aérien.

On a schématiquement et fonctionnellement représenté sur l'unique figure, un exemple de véhicule V, ici de type automobile, équipé de deux exemples de réalisation de dispositifs d'éclairage DEj selon l'invention. Sur la figure, l'indice j = 1 désigne le côté gauche du véhicule V et l'indice j = 2 désigne le côté droit du véhicule V.

On notera que le véhicule V pourrait n'être équipé que d'un unique dispositif d'éclairage DEj selon l'invention, ou bien de plus de deux dispositifs d'éclairage DEj selon l'invention.

Comme cela est illustré sur l'unique figure, un dispositif d'éclairage DEj, selon l'invention, comprend au moins des diodes électroluminescentes DL, des moyens d'alimentation électrique MA et des moyens de contrôle MC.

Les diodes électroluminescentes DL sont propres à participer à la formation de faisceaux de lumière FLjk (k = 1 à 3) assurant des éclairements de portées comprises entre une faible portée correspondant à une fonction de feu de croisement et une longue portée, via une moyenne portée correspondant à une fonction de feu de route, pour un véhicule V. Certaines de ces diodes électroluminescentes DL sont de type dit à haute brillance et propres à participer à la formation du faisceau de lumière ayant une longue portée supérieure à la moyenne portée.

Ces diodes électroluminescentes DL peuvent être divisées en trois groupes qui sont soit tous séparés spatialement, soit au moins partiellement mélangés d'une façon prédéfinie (éventuellement comme une matrice de diodes (« ou pixel lighting »)). Dans ce cas, un premier groupe de diodes électroluminescentes DL peut être dédié à la formation d'un premier faisceau de lumière FLj1 (k = 1) assurant un éclairement d'une faible portée (ou LB (« Low Beam »)), un deuxième groupe de diodes électroluminescentes DL peut être dédié à la formation d'un deuxième faisceau de lumière FLj2 (k = 2) assurant un éclairement d'une moyenne portée (ou HB (« High Beam »)), et un troisième groupe de diodes électroluminescentes DL peut être dédié à la formation d'un troisième faisceau de lumière FLj3 (k = 3) assurant un éclairement d'une longue portée.

On notera que les diodes électroluminescentes DL du deuxième groupe pourraient être également de type dit à haute brillance. Dans ce cas, ce qui les différencie de celles du troisième groupe c'est simplement l'alimentation électrique qu'elles reçoivent, laquelle est strictement inférieure à celle reçue par les diodes électroluminescentes DL du troisième groupe.

Par exemple, ces diodes électroluminescentes DL peuvent être de type classique (ou LED). Mais en variante ces diodes électroluminescentes DL pourraient être de type organique (ou OLED).

Les moyens d'alimentation électrique MA sont propres à fournir aux diodes électroluminescentes DL des alimentations électriques qui sont définies par des commandes, afin qu'elles fournissent des intensités lumineuses fonction de ces alimentations électriques.

Par exemple, la faible portée maximale peut être typiquement comprise entre 60 m et 100 m, la moyenne portée maximale peut être typiquement comprise entre 150 m et 300 m, et la longue portée maximale peut être typiquement comprise entre 350 m et 550 m.

On notera que la définition des faisceaux de lumière FLjk, et notamment leurs divergences, peut éventuellement se faire à l'aide de moyens optiques placés en aval de certaines au moins des diodes électroluminescentes DL et faisant également partie du dispositif d'éclairage DEj. De tels moyens optiques peuvent, par exemple, comprendre au moins une lentille. Le positionnement relatif de ces moyens optiques peut éventuellement être variable par rapport à certaines au moins des diodes électroluminescentes DL. Dans ce cas, les moyens optiques peuvent, par exemple, être couplés à des moyens de positionnement faisant également partie du dispositif d'éclairage DEj et comprenant, par exemple, au moins un micromoteur.

Les moyens d'alimentation électrique MA peuvent, par exemple et notamment, comporter des composants électroniques de puissance destinés à être couplés au réseau d'alimentation électrique du véhicule V.

On notera que les diodes électroluminescentes DL et les moyens d'alimentation électrique MA peuvent être éventuellement installés sur une plaque de support, comme par exemple une carte à circuits imprimés, éventuellement de type PCB (« Printed Circuit Board »), rigide ou flexible (de type « Flex »).

Les moyens de contrôle MC sont propres, en cas de réception d'une autorisation d'éclairement à longue portée devant le véhicule V, à fournir aux moyens d'alimentation électrique MA des commandes successives qui sont propres à induire un faisceau de lumière FLjk assurant un éclairement de portée croissante entre la faible portée (ou LB) et la longue portée, via la moyenne portée (ou HB).

Cette augmentation de la portée de l'éclairement permet très avantageusement une accoutumance oculaire progressive du conducteur et la garantie d'une homogénéité de la prestation par rapport à d'autres prestations d'éclairage progressif offertes par le véhicule V. En outre, cela permet de mieux et plus progressivement attirer l'attention du conducteur sur la nouvelle zone localisée qui est éclairée.

Chaque autorisation d'éclairement à longue portée peut, par exemple, être fournie par un dispositif de détection DD embarqué dans le véhicule V et chargé d'analyser l'environnement devant ce dernier (V), notamment pour détecter d'autres véhicules ou des piétons et estimer la distance séparant le véhicule V de ces véhicules ou piétons détectés.

Ce dispositif de détection DD peut, par exemple, analyser des images représentatives de l'environnement situé devant le véhicule V et fournies par des moyens d'acquisition installés dans une partie avant du véhicule V. Ces moyens d'acquisition font éventuellement partie du dispositif de détection DD et comprennent, par exemple, un générateur d'ultrasons et des capteurs ultrasoniques, et/ou au moins une caméra, et/ou un radar, et/ou un lidar. Le dispositif de détection DD est par exemple chargé à chaque instant de fournir aux moyens de contrôle MC de chaque dispositif d'éclairage DEj une commande définissant la fonction photométrique que ce dernier (DEj) est autorisé à assurer compte tenu des besoins et du contexte environnemental en cours. C'est donc lui qui dans ce cas ordonne aux moyens de contrôle MC de chaque dispositif d'éclairage DEj d'imposer la fonction de feu de croisement alors que la fonction de feu de route est activée, ou inversement, lorsque cela s'avère nécessaire.

On notera que lorsque le dispositif d'éclairage DEj comprend également des moyens optiques déplaçables et participant à la définition des faisceaux de lumière FLjk, les moyens de contrôle MC adressent également des commandes dédiées aux moyens de positionnement qui sont chargés de positionner ces derniers afin qu'ils positionnent les moyens optiques dans la position dédiée à la portée requise.

Au moins deux modes de réalisation du dispositif d'éclairage DEj peuvent être envisagés.

Dans un premier mode de réalisation les moyens de contrôle MC sont propres, en cas de réception de l'autorisation d'éclairement à longue portée devant le véhicule V, à fournir aux moyens d'alimentation électrique MA trois commandes successives qui sont propres à induire respectivement un premier faisceau de lumière FLj1 assurant l'éclairement de faible portée, puis un deuxième faisceau de lumière FLj2 assurant l'éclairement de moyenne portée, puis un troisième faisceau de lumière FLj3 assurant l'éclairement de longue portée.

En d'autres termes, dans ce premier mode de réalisation, lorsque les moyens de contrôle MC reçoivent une autorisation d'éclairement à longue portée, ils fournissent aux moyens d'alimentation électrique MA une première commande qui va induire la définition d'un premier faisceau de lumière FLj1 assurant un éclairement de faible portée, puis ils fournissent aux moyens d'alimentation électrique MA une deuxième commande qui va induire la définition d'un deuxième faisceau de lumière FLj2 assurant un éclairement de moyenne portée, et enfin ils fournissent aux moyens d'alimentation électrique MA une troisième commande qui va induire la définition d'un troisième faisceau de lumière FLj3 assurant un éclairement de longue portée. On comprendra que la première commande est destinée à provoquer l'alimentation des diodes électroluminescentes DL du premier groupe, la deuxième commande est destinée à provoquer l'alimentation des diodes électroluminescentes DL du deuxième groupe, et la troisième commande est destinée à provoquer l'alimentation des diodes électroluminescentes DL du troisième groupe et de type dit à haute brillance.

Dans un second mode de réalisation les moyens de contrôle MC sont propres, en cas de réception de l'autorisation d'éclairement à longue portée devant le véhicule V, à fournir aux moyens d'alimentation électrique MA des commandes successives qui sont propres à induire un faisceau de lumière FLjk assurant un éclairement ayant une portée croissant progressivement de la faible portée à la longue portée.

En d'autres termes, dans ce second mode de réalisation, lorsque les moyens de contrôle MC reçoivent une autorisation d'éclairement à longue portée, ils fournissent aux moyens d'alimentation électrique MA une commande qui va induire la définition d'un premier faisceau de lumière FLj1 assurant un éclairement de faible portée, puis ils fournissent aux moyens d'alimentation électrique MA au moins une commande intermédiaire qui va induire la définition d'un faisceau de lumière assurant un éclairement d'une portée comprise entre la faible portée et la moyenne portée, puis ils fournissent aux moyens d'alimentation électrique MA une commande qui va induire la définition d'un deuxième faisceau de lumière FLj2 assurant un éclairement de moyenne portée, puis ils fournissent aux moyens d'alimentation électrique MA au moins une commande intermédiaire qui va induire la définition d'un faisceau de lumière assurant un éclairement d'une portée comprise entre la moyenne portée et la longue portée, et enfin ils fournissent aux moyens d'alimentation électrique MA une commande qui va induire la définition d'un troisième faisceau de lumière FLj3 assurant un éclairement de longue portée.

Ce second mode de réalisation nécessite que les diodes électroluminescentes DL des deuxième et troisième groupes délivrent des intensités lumineuses variables. Plus précisément, les diodes électroluminescentes DL du deuxième groupe délivrent une intensité croissant entre une intensité minimale correspondant à l'éclairement de faible portée (par valeur supérieure) et une intensité maximale correspondant à l'éclairement de moyenne portée, et les diodes électroluminescentes DL du troisième groupe délivrent une intensité croissant entre une intensité minimale correspondant à l'éclairement de moyenne portée (par valeur supérieure) et une intensité maximale correspondant à l'éclairement de longue portée.

On notera qu'il est avantageux que les moyens de contrôle MC soient propres, en cas de réception de l'autorisation d'éclairement à longue portée devant le véhicule V, à fournir aux moyens d'alimentation électrique MA les commandes successives permettant de faire croître la portée seulement lorsque le véhicule V circule à une vitesse qui est supérieure à un premier seuil s1 prédéfini. Cette option permet d'empêcher la croissance de la portée dans certaines situations où la moyenne portée et/ou la longue portée est/sont interdite(s) du fait de règles. C'est par exemple le cas dans les agglomérations où dans les zones où les vitesses sont fortement limitées.

La vitesse en cours du véhicule V est une information qui est facilement accessible au sein de ce dernier (V).

Par exemple, le premier seuil s1 prédéfini peut être compris entre 50 km/h et 70 km/h.

On notera également que les moyens de contrôle MC peuvent être propres à augmenter (ou faire croître) la portée de l'éclairement dans un premier intervalle de temps it1 prédéfini, et éventuellement configurable par le conducteur.

Par exemple, la durée de ce premier intervalle de temps it1 prédéfini peut être comprise entre 500 ms et 2 s.

On notera également que les moyens de contrôle MC peuvent être propres à fournir aux moyens d'alimentation électrique MA une commande qui est destinée à induire une valeur maximale de la longue portée fonction du rayon de courbure de la portion de voie de circulation sur laquelle circule le véhicule V et/ou de la distance séparant ce dernier (V) d'un autre véhicule ou corps placé devant lui (V). On comprendra en effet qu'il est préférable de réduire la valeur maximale de la longue portée lorsque le véhicule V est, ou s'apprête à entrer, dans un virage, et/ou lorsque distance dite inter-véhicules se réduit. Les informations relatives au rayon de courbure et à la distance inter-véhicules peuvent être fournies par le dispositif de détection DD.

On notera également que les moyens de contrôle MC peuvent être propres, en cas de réception d'une fin d'autorisation d'éclairement à longue portée devant le véhicule V, à fournir aux moyens d'alimentation électrique MA des commandes successives qui sont propres à induire un faisceau de lumière FLjk assurant un éclairement de portée décroissante entre la longue portée et la faible portée, via la moyenne portée. Cette option permet très avantageusement l'accoutumance oculaire progressive du conducteur.

En présence de cette dernière option, les moyens de contrôle MC peuvent être propres à fournir aux moyens d'alimentation électrique MA les commandes successives imposant l'éclairement de portée décroissante lorsque le véhicule V circule à une vitesse qui est inférieure à un second seuil s2 prédéfini. Cette option permet d'imposer la décroissance de la portée dans certaines situations où la moyenne portée et/ou la longue portée est/sont interdites du fait de règles. On anticipe ainsi l'arrivée dans une zone à vitesse très limitée par l'analyse de la réduction de la vitesse en cours du véhicule V.

Par exemple, ce second seuil s2 prédéfini peut être compris entre 50 km/h et 80 km/h.

Egalement en présence de l'option relative à la décroissance de la portée de l'éclairement, les moyens de contrôle MC peuvent être propres à diminuer cette portée dans un second intervalle de temps it2 prédéfini, et éventuellement configurable par le conducteur.

Par exemple, la durée de ce second intervalle de temps it2 prédéfini peut être comprise entre 500 ms et 1 s.

Egalement en présence de l'option relative à la décroissance de la portée de l'éclairement, les moyens de contrôle MC peuvent être propres à fournir aux moyens d'alimentation électrique MA une commande qui est destinée à induire une valeur maximale de la longue portée fonction du rayon de courbure de la portion de voie de circulation sur laquelle circule le véhicule V et/ou de la distance séparant ce dernier (V) d'un autre véhicule ou corps placé devant lui (V).

On notera également que lorsque le véhicule V comprend plusieurs dispositifs d'éclairage DEj, ces derniers (DEj) peuvent comprendre soit des moyens de contrôle MC indépendants, soit des moyens de contrôle MC communs.

On notera également que dans l'exemple de réalisation illustré non limitativement sur l'unique figure, les moyens de contrôle MC font partie d'un calculateur CA qui assure éventuellement au moins une autre fonction au sein du véhicule V, et qui est de préférence connecté au réseau de communication du véhicule V (éventuellement de type multiplexé et permettant les échanges d'informations entre équipements électroniques embarqués). Mais cela n'est pas obligatoire. En effet, les moyens de contrôle MC pourraient faire partie d'un équipement électronique faisant lui-même partie du dispositif d'éclairage DEj, équipant éventuellement un bloc optique BOj, et connecté à l'éventuel réseau de communication du véhicule V. Par conséquent, les moyens de contrôle MC peuvent être réalisés sous la forme de modules logiciels (ou « software ») ou bien d'une combinaison de circuits ou composants électroniques (ou « hardware ») et de modules logiciels.

L'invention offre plusieurs avantages, parmi lesquels :
- la possibilité d'accoutumer progressivement la vision du conducteur à la variation de l'intensité lumineuse de l'éclairement associée à la variation de la portée,
- la fourniture de trois fonctions photométriques différentes (feu de croisement, feu de route et feu à longue portée) avec un même dispositif d'éclairage,
- la prise en compte de l'environnement du véhicule et des conditions de conduite de ce dernier,
- une meilleure et plus intuitive compréhension par le conducteur de la zone éclairée en longue portée.

## Revendications

1. Dispositif d'éclairage (DEj) comprenant des diodes électroluminescentes (DL) propres à participer à la formation de faisceaux de lumière (FLjk) assurant des éclairements de faible portée d'une fonction de feu de croisement et de moyenne portée d'une fonction de feu de route pour un véhicule (V), et des moyens d'alimentation électrique (MA) propres à fournir auxdites diodes électroluminescentes (DL) des alimentations électriques définies par des commandes pour qu'elles fournissent des intensités lumineuses fonction de ces alimentations électriques, dans lequel certaines desdites diodes électroluminescentes (DL) sont de type dit à haute brillance et propres à participer à la formation d'un faisceau de lumière (FLj3) ayant une longue portée supérieure à ladite moyenne portée, et dans lequel des moyens de contrôle (MC) sont propres, en cas de réception d'une autorisation d'éclairement à longue portée devant ledit véhicule (V), à fournir auxdits moyens d'alimentation électrique (MA) des commandes successives propres à induire un faisceau de lumière (FLjk) assurant un éclairement ayant une portée croissant progressivement de ladite faible portée à ladite longue portée, via ladite moyenne portée, **caractérisé en ce que** lesdits moyens de contrôle (MC) sont propres à fournir auxdits moyens d'alimentation électrique (MA) une commande destinée à induire une valeur maximale de ladite longue portée fonction d'un rayon de courbure d'une portion d'une voie de circulation sur laquelle circule ledit véhicule (V).

2. Dispositif selon la revendication 1, **caractérisé en ce que** lesdits moyens de contrôle (MC) sont propres, en cas de réception de ladite autorisation d'éclairement à longue portée devant ledit véhicule (V), à fournir auxdits moyens d'alimentation électrique (MA) trois commandes successives propres à induire respectivement un premier faisceau de lumière (FLj1) assurant ledit éclairement de faible portée, puis un deuxième faisceau de lumière (FLj2) assurant ledit éclairement de moyenne portée, puis un troisième faisceau de lumière (FLj3) assurant ledit éclairement de longue portée.

3. Dispositif selon l'une des revendications 1 à 2, **caractérisé en ce que** lesdits moyens de contrôle (MC) sont propres, en cas de réception de ladite autorisation d'éclairement à longue portée devant ledit véhicule (V), à fournir auxdits moyens d'alimentation électrique (MA) lesdites commandes successives lorsque ledit véhicule (V) circule à une vitesse supérieure à un premier seuil prédéfini.

4. Dispositif selon l'une des revendications 1 à 3, **caractérisé en ce que** lesdits moyens de contrôle (MC) sont propres à augmenter la portée dudit éclairement dans un premier intervalle de temps prédéfini.

5. Dispositif selon l'une des revendications 1 à 4, **caractérisé en ce que** lesdits moyens de contrôle (MC) sont propres, en cas de réception d'une fin d'autorisation d'éclairement à longue portée devant ledit véhicule (V), à fournir auxdits moyens d'alimentation électrique (MA) des commandes successives propres à induire un faisceau de lumière (FLjk) assurant un éclairement de portée décroissante entre ladite longue portée et ladite faible portée, via ladite moyenne portée.

6. Dispositif selon la revendication 5, **caractérisé en ce que** lesdits moyens de contrôle (MC) sont propres à fournir auxdits moyens d'alimentation électrique (MA) lesdites commandes successives imposant l'éclairement de portée décroissante lorsque ledit véhicule (V) circule à une vitesse inférieure à un second seuil prédéfini.

## Patentansprüche

1. Beleuchtungsvorrichtung (DEj), die Licht emittierende Dioden (DL) umfasst, die dazu geeignet sind, an dem Bilden von Lichtstrahlen (FLjk) teilzunehmen, die Beleuchtungen mit geringer Reichweite für Abblendlichtfunktion und mit mittlerer Reichweite einer Fernlichtfunktion für ein Fahrzeug (V) umfassen, und Stromversorgungsmittel (MA), die dazu geeignet sind, den Licht emittierenden Dioden (DL) Stromversorgungen zu liefern, die von Befehlen definiert sind, damit sie Leuchtstärken in Abhängigkeit von diesen Stromversorgungen liefern, wobei bestimmte der Licht emittierenden Dioden (DL) vom Typ mit hoher Helligkeit sind und dazu geeignet sind, an dem Bilden eines Lichtstrahls (FLj3) teilzunehmen, der eine Reichweite aufweist, die größer ist als die mittlere Reichweite, und wobei Steuermittel (MC) im Fall des Empfangs einer Beleuchtungsgenehmigung mit langer Reichweite vor dem Fahrzeug (V) dazu geeignet sind, den Stromversorgungsmitteln (MA) aufeinanderfolgende Befehle zu liefern, die dazu geeignet sind, einen Lichtstrahl (FLjk) zu induzieren, der eine Beleuchtung sicherstellt, die eine Reichweite aufweist, die allmählich von der geringen Reichweite zu der langen Reichweite über die mittlere Reichweite steigt, **dadurch gekennzeichnet, dass** die Steuermittel (MC) dazu geeignet sind, den Stromversorgungsmitteln (MA) einen Befehl zu liefern, der dazu bestimmt ist, einen Höchstwert der langen Reichweite in Abhängigkeit von einem Krümmungsradius eines Abschnitts einer Fahrbahn, auf der das Fahrzeug (V) fährt, zu induzieren.

2. Vorrichtung nach Anspruch 1, **dadurch gekennzeichnet, dass** die Steuermittel (MC) in dem Fall von Empfang der Beleuchtungsgenehmigung mit langer Reichweite vor dem Fahrzeug (V) dazu geeignet sind, den Stromversorgungsmitteln (MA) drei aufeinanderfolgende Befehle zu liefern, die dazu geeignet sind, jeweils einen ersten Lichtstrahl (FLj1) zu induzieren, der die Beleuchtung mit geringer Reichweite sicherstellt, dann einen zweiten Lichtstrahl (FLj2), der die Beleuchtung mit mittlerer Reichweite sicherstellt, dann einen dritten Lichtstrahl (FLj3), der die Beleuchtung mit langer Reichweite sicherstellt.

3. Vorrichtung nach einem der Ansprüche 1 bis 2, **dadurch gekennzeichnet, dass** die Steuermittel (MC) dazu geeignet sind, im Fall des Empfangs der Beleuchtungsgenehmigung mit langer Reichweite vor dem Fahrzeug (V) den Stromversorgungsmitteln (MA) die aufeinanderfolgenden Befehle zu liefern, wenn das Fahrzeug (V) mit einer Geschwindigkeit fährt, die größer ist als ein erster vorbestimmter Schwellenwert.

4. Vorrichtung nach einem der Ansprüche 1 bis 3, **dadurch gekennzeichnet, dass** die Steuermittel (MC) dazu geeignet sind, die Reichweite der Beleuchtung in einem ersten vordefinierten Zeitintervall zu steigern.

5. Vorrichtung nach einem der Ansprüche 1 bis 4, **dadurch gekennzeichnet, dass** die Steuermittel (MC) dazu geeignet sind, im Fall eines Empfangs eines Endes der Beleuchtungsgenehmigung mit langer Reichweite vor dem Fahrzeug (V) den Stromversorgungsmitteln (MA) aufeinanderfolgende Befehle zu liefern, die dazu geeignet sind, einen Lichtstrahl (FLjk) zu induzieren, der eine Beleuchtung mit abnehmender Reichweite zwischen der langen Reichweite und der geringen Reichweite über die mittlere Reichweite sicherstellt.

6. Vorrichtung nach Anspruch 5, **dadurch gekennzeichnet, dass** die Steuermittel (MC) dazu geeignet sind, den Stromversorgungsmitteln (MA) aufeinanderfolgende Befehle zu liefern, die die Beleuchtung mit abnehmender Reichweite auferlegen, falls das Fahrzeug (V) mit einer Geschwindigkeit unter einem zweiten vordefinierten Schwellenwert fährt.

## Claims

1. A lighting device (DEj) including light-emitting diodes (DL) suitable to participate in the formation of beams of light (FLjk) ensuring short range illuminations of a dipped headlight function, and medium range illuminations of a full beam function for a vehicle (V), and electrical supply means (MA) suitable to provide to said light-emitting diodes (DL) electrical supplies defined by commands so that they provide light intensities as a function of these electrical supplies, in which some of said light-emitting diodes (DL) are of the high brightness type and suitable to participate in the formation of a beam of light (FLj3) having a long range greater than said medium range, and in which control means (MC) are suitable, in the case of reception of an authorisation for long range illumination in front of said vehicle (V), to provide to said electrical supply means (MA) successive commands suitable to induce a light beam (FLjk) ensuring an illumination having a range increasing progressively from said short range to said long range, via said medium range, **characterized in that** said control means (MC) are suitable to provide to said electrical supply means (MA) a command intended to induce a maximum value of said long range as a function of a radius of curvature of a portion of a carriageway on which said vehicle (V) is travelling.

2. The device according to Claim 1, **characterized in that** said control means (MC) are suitable, in the case of reception of said authorisation for long-range illumination in front of said vehicle (V), to provide to said electrical supply means (MA) three successive commands suitable to induce respectively a first beam of light (FLj1) ensuring said short range illumination, then a second beam of light (FLj2) ensuring said medium range illumination, then a third beam of light (FLj3) ensuring said long range illumination.

3. The device according to one of Claims 1 to 2, **characterized in that** said control means (MC) are suitable, in the case of reception of said authorisation for long range illumination in front of said vehicle (V), to provide to said electrical supply means (MA) said successive commands when said vehicle (V) is travelling at a speed greater than a first predefined threshold.

4. The device according to one of Claims 1 to 3, **characterized in that** said control means (MC) are suitable to increase the range of said illumination in a first predefined time interval.

5. The device according to one of Claims 1 to 4, **characterized in that** said control means (MC) are suitable, in the case of reception of an end of authorisation of long range illumination in front of said vehicle (V), to provide to said electrical supply means (MA) successive commands suitable to induce a beam of light (FLjk) ensuring an illumination of decreasing range between said long range and said short range, via said medium range.

6. The device according to Claim 5, **characterized in that** said control means (MC) are suitable to provide to said electrical supply means (MA) said successive commands imposing the illumination of decreasing range when said vehicle (V) is travelling at a speed lower than a second predefined threshold.
